# EUROPÄISCHE PATENTANMELDUNG

(11) **EP 2 312 854 A1**
(43) Veröffentlichungstag der Anmeldung: **20.04.2011**
(21) Anmeldenummer: 10000484.5
(22) Anmeldetag: 19.01.2010
(51) Int. Cl.: H04N 7/26, H04N 7/50

(54) **Verfahren zur Codierung von Symbolen aus einer Folge digitalisierter Bilder**

(30) Priorität: 15.10.2009 EP 09013060
(71) Anmelder: Siemens Aktiengesellschaft, 80333 München (DE)
(72) Erfinder: Amon, Peter, 81675 München (DE)

(57) **Zusammenfassung**

Die Erfindung betrifft ein Verfahren zur Codierung von Symbolen aus einer Folge digitalisierter Bilder (I), wobei die Bilder (I) in Bildbereiche (MB) unterteilt sind und die Symbole (S) eines jeweiligen Bildbereichs (MB) mittels einer Entropiecodierung codiert werden, welche auf einem oder mehreren Wahrscheinlichkeitsmodellen beruht, wobei das oder die Wahrscheinlichkeitsmodelle die Häufigkeiten von in Bildbereichen (MB) auftretenden Symbolen (S) berücksichtigen. In dem erfindungsgemäßen Verfahren werden die Bildbereiche (MB) in Codierzyklen (CC, CC1, CC2, ... CC5) derart verarbeitet, dass in einem Codierzyklus (CC, CC1, CC2, ... CC5) die Entropiecodierung in mehreren parallelen Codierzweigen (1, 2, 3) erfolgt, wobei in einem jeweiligen Codierzweig (1, 2, 3) ein Bildbereich (MB) basierend auf einem Satz von Wahrscheinlichkeitsmodellen codiert wird, wobei die Häufigkeiten für den Satz von Wahrscheinlichkeitsmodellen bei der Codierung des Bildbereichs basierend auf den im Bildbereich (MB) auftretenden Symbolen (S) adaptiert werden. Der in jedem Codierzweig (1, 2, 3) zur Codierung verwendete Satz von Wahrscheinlichkeitsmodellen basiert auf einem gemeinsamen, für alle Codierzweige (1, 2, 3) gültigen Satz von Wahrscheinlichkeitsmodellen, welcher die Häufigkeiten von Symbolen (S) in den Bildbereichen (MB) aller Codierzweige (1, 2, 3) berücksichtigt. Der gemeinsame Satz von Wahrscheinlichkeitsmodellen wird in vorbestimmten zeitlichen Abständen basierend auf in zumindest einem zeitlich vorhergehenden Codierzyklus (CC, CC1, CC2, ... CC5) adaptierten Häufigkeiten aktualisiert.

## Beschreibung

Die Erfindung betrifft ein Verfahren zur Codierung von Symbolen aus einer Folge digitalisierter Bilder sowie ein entsprechendes Decodierverfahren. Darüber hinaus betrifft die Erfindung eine Codiervorrichtung und eine Decodiervorrichtung zur Durchführung des Codier- bzw. Decodierverfahrens.

Videocodierverfahren werden in der Regel in zwei Verarbeitungsprozessen durchgeführt. Zunächst werden die Bilder im Videostrom in geeigneter Weise mittels Prädiktion und Transformation dekorreliert. Das Ergebnis des Dekorrelationsschritts sind Symbole in der Form von Transformationskoeffizienten, Bewegungsvektoren, weiterer Codierinformationen und dergleichen. Hieran schließt sich oftmals noch eine Quantisierung der erzeugten Symbole an, wodurch die Kompressionseffizienz erhöht wird. In einem zweiten Verarbeitungsprozess werden die generierten Symbole einer verlustfreien Entropiecodierung unterzogen, bei der die noch vorhandene Redundanz in den generierten Symbolen, d.h. deren Auftretenswahrscheinlichkeiten und deren gegenseitigen statistischen Abhängigkeit, ausgenutzt wird, um aus den Symbolen möglichst kurze Codewörter mit möglichst kurzer Gesamtlänge des Datenstroms zu erzeugen.

Aus dem Stand der Technik sind verschiedene Verfahren zur Entropiecodierung bekannt. Bei der VLC-Codierung (VLC = Variable Length Coding) wird jedes generierte Symbol bijektiv auf ein Codewort abgebildet. Die Beziehung zwischen einem Symbol und dem entsprechenden Codewort wird dabei durch eine Codetabelle, wie z.B. eine Look-up-Tabelle, repräsentiert.

Ein weiteres gängiges Verfahren der Entropiecodierung ist die arithmetische Codierung. Im Unterschied zur VLC-Codierung, bei der ein Symbol in ein Codewort transformiert wird, wird bei der arithmetischen Codierung aus mehreren Symbolen ein einzelnes Codewort generiert. Bei der arithmetischen Codierung werden die Symbole basierend auf ihren Häufigkeiten vorzugsweise auf Binärzahlen abgebildet, so dass eine binäre Repräsentation der aufeinander folgenden Symbole erhalten wird.

Allgemein beruhen Entropiecodierverfahren auf dem Prinzip, aus den Häufigkeiten der auftretenden Symbole eine oder mehrere Wahrscheinlichkeitsmodelle abzuleiten, auf deren Basis kurze Codewörter erzeugt werden, d.h. für Symbole oder Symbolfolgen mit hoher Häufigkeit werden mit der Entropiecodierung kürzere Codewörter als für Symbole bzw. Symbolfolgen mit niedriger Häufigkeit generiert. In der Regel sind Entropiecodierverfahren kontextbasiert, d.h. es werden verschiedene Typen von Symbolen unterschieden, welche unterschiedliche Informationen repräsentieren. Für diese unterschiedlichen Typen von Symbolen werden die Häufigkeiten der auftretenden Symbole getrennt in einem eigenen Kontext und damit basierend auf einem eigenen Wahrscheinlichkeitsmodell verarbeitet. Ein Kontext kann in Videocodierverfahren gegebenenfalls auch von anderen Kriterien abhängen, beispielsweise kann die Codierung eines Bildbereichs von den Codierentscheidungen benachbarter Bildbereiche im Bild abhängen. Ferner sind Entropiecodierverfahren häufig adaptiv ausgestaltet, d.h. die Wahrscheinlichkeitsmodelle werden basierend auf den sich verändernden Häufigkeiten der auftretenden Symbole bei der Codierung entsprechend angepasst.

Um die Codiergeschwindigkeit von Entropiecodierverfahren zu erhöhen, sind aus dem Stand der Technik verschiedene Verfahren bekannt. Im Videocodier-Standard H.264/AVC werden die Bilder des Videostroms in sog. Slices eingeteilt, wobei jeder Slice ein Teil des Bilds darstellt, der vollkommen unabhängig von anderen Teilen codiert werden kann. Das heißt, sowohl die Generierung der ursprünglichen Symbole als auch die anschließende Generierung des Codeworts basierend auf einer Entropiecodierung weisen keine Abhängigkeiten zwischen unterschiedlichen Slices auf. Somit werden die Wahrscheinlichkeitsmodelle bzw. Kontexte nicht über Slices hinweg angepasst. Dies führt zu einer schlechteren Kompressionseffizienz.

Aus dem Stand der Technik ist ferner die Unterteilung von Videobildern in sog. Entropy-Slices bekannt (siehe Druckschrift [2]). Im Unterschied zu den oben beschriebenen herkömmlichen Slices erlauben Entropy-Slices Abhängigkeit zwischen den Symbolen, wie z.B. Intraprädiktion. Nur die Erzeugung der Codewörter basierend auf der Entropiecodierung ist zwischen den einzelnen Entropy-Slices unabhängig. Durch die Verwendung von Entropy-Slices wird die Kompressionseffizienz im Vergleich zu herkömmlichen Slices erhöht. Nichtsdestotrotz besteht weiterhin der Nachteil, dass unterschiedliche Statistiken für die Symbole unterschiedlicher Entropy-Slices verwendet werden, was die Effizienz der Entropiecodierung wiederum vermindert.

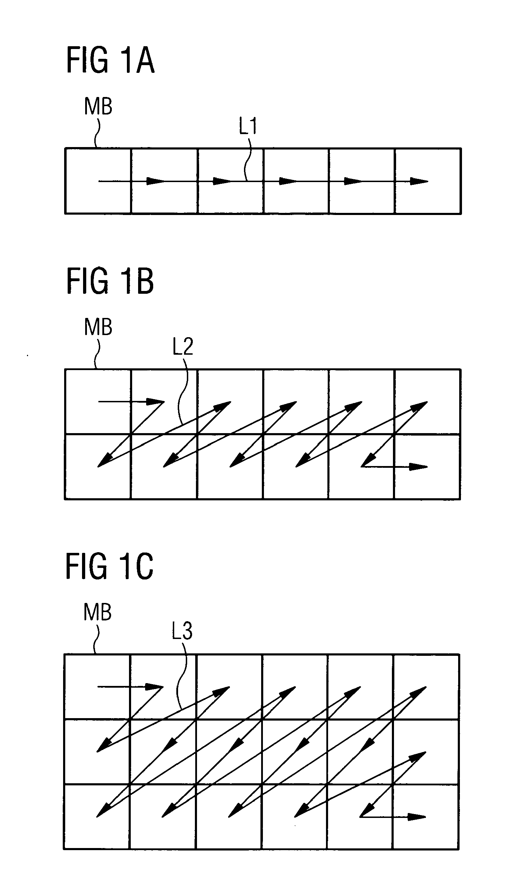

In dem Dokument [1] ist das Konzept von sog. geordneten Entropy-Slices beschrieben, welche die Eigenschaften der oben beschriebenen Entropy-Slices verbessern. Es wird dabei die Bildung eines Kontextes für die Entropiecodierung über Entropy-Slices hinweg erlaubt. Es werden somit die statistischen Abhängigkeiten zwischen Entropy-Slices berücksichtigt und hierdurch die Codiereffizienz verbessert. Darüber hinaus werden die einzelnen Makroblocks im Bild bei der Codierung nicht Zeile für Zeile eingelesen, sondern zickzack-förmig. Dies wird in Fig. 1A bis 1C verdeutlich. Diese Figuren zeigen verschiedene Varianten des Einlesens von Makroblöcken gemäß Druckschrift [1], wobei die einzelnen Makroblöcke als aufeinander folgende Rechtecke wiedergegeben sind und aus Übersichtlichkeitsgründen nur zum Teil mit Bezugszeichen MB bezeichnet sind. Fig. 1A zeigt ein zeilenweises Einlesen von Makroblöcken, wie durch die vertikale Linie L1 angedeutet ist. Bei der Berücksichtigung von Kontext, bei dem für die Codierung eines Makroblocks der linke, der obere linke, der obere und der obere rechte benachbarte Makroblock verfügbar sein müssen, besteht bei dieser Variante das Problem, dass nicht mehrere Zeilen von Makroblocks parallel verarbeitet werden können. Im Unterschied hierzu wird bei der zickzack-förmigen Verarbeitung von Makroblocks basierend auf der Linie L2 gemäß Fig. 1B eine parallele Verarbeitung von jeweils zwei Zeilen ermöglicht, denn die Codierung des ersten Makroblocks des folgenden Entropy-Slices in der dritten Zeile kann bereits beginnen, wenn der fünfte Makroblock des ersten Zeilenpaars eingelesen wurde. Fig. 1C zeigt eine weitere Variante des zickzack-förmigen Einlesens von Makroblocks, wobei nunmehr die Verarbeitung von drei Zeilen pro geordnetem Entropy-Slice gemäß der Linie L3 ermöglicht wird.

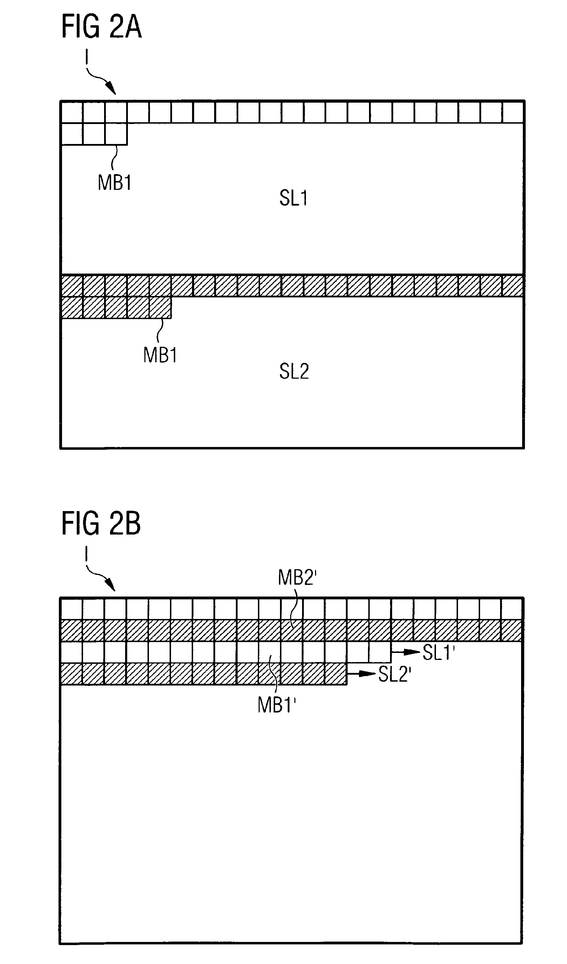

Eine weitere Variante von Entropy-Slices sind sog. Interleaved Entropy-Slices, welche in der Druckschrift [4] beschrieben sind. Dabei stellen die Slices keine zusammenhängenden Zeilen dar, sondern die Zeilen der einzelnen Slices sind ineinander verschachtelt. Dies wird nochmals in Fig. 2A und 2B verdeutlicht. Fig. 2A zeigt dabei eine Unterteilung eines Bilds I in zwei herkömmlichen Entropy-Slices SL1 und SL2, wobei die obere Hälfte des Bilds ein zusammenhängendes Slice SL1 mit Makroblocks MB1 bildet und der untere Bildteil SL2 ein zusammenhängendes Slice SL2 mit entsprechenden Makroblocks MB2 (schraffiert dargestellt) bildet. Im Unterschied zu diesen herkömmlichen Slices ist in Fig. 2B ein Beispiel von Interleaved Entropy-Slices gezeigt. Dabei wird das jeweilige Slice SL1' bzw. SL2' durch um eine Zeile zueinander versetzte Makroblockzeilen gebildet. Das Slice SL1' ist in Fig. 2B mit vollflächigen Makroblocks MB1' angedeutet und wird durch die erste, dritte, fünfte, usw. Zeile gebildet. Demgegenüber ist das Slice SL2' durch schraffierte Makroblocks MB2' angedeutet und durch die zweite, vierte, sechste, usw. Zeile gebildet. Interleaved Entropy-Slices ermöglichen eine Kontextbildung über Entropy-Slices hinweg. Es wird jedoch keine gemeinsame Statistik für die zur Entropiecodierung verwendeten Wahrscheinlichkeitsmodelle generiert.

Zur Verbesserung der Kompressionseffizienz in Videocodierverfahren ist ferner in Druckschrift [4] eine Syntax-Element-Partitionierung beschrieben. Dabei werden mehrere Codewörter für unterschiedliche Gruppen von Syntaxelementen, wie z.B. Mode-Informationen, Bewegungsvektoren, Transformationskoeffizienten, erzeugt. Da die einzelnen Gruppen unterschiedliche Kontexte haben, wird die Kontextbildung auch separat durchgeführt. Da die relativen Häufigkeiten der unterschiedlichen Gruppen verschieden sind, ist die Rechenlast bei einer Codierung unter Verwendung von parallelen Codierzweigen für die einzelnen Codierzweige unausgeglichen.

In dem Dokument [3] ist eine spezielle Variante einer arithmetischen Codierung beschrieben, bei der zwei Binärsymbole bei der Codierung parallel verarbeitet werden. Es können auf diese Weise vier Zustände statt zwei Zustände in einem Codierzyklus codiert werden. Jedoch ist die Kontextbildung bei dieser Art der Codierung komplex und es werden pro Codierzyklus mehr Operationen benötigt.

Aufgabe der Erfindung ist es, die Entropiecodierung von Symbolen in einer Folge digitalisierter Bilder derart zu verbessern, dass eine parallele Verarbeitung von mehreren Bildbereichen bei gleichzeitig hoher Codiereffizienz ermöglicht wird.

Diese Aufgabe wird durch das Codierverfahren gemäß Patentanspruch 1 bzw. das Decodierverfahren gemäß Patentanspruch 14 bzw. die Codiervorrichtung gemäß Patentanspruch 16 bzw. die Decodiervorrichtung gemäß Patentanspruch 18 gelöst. Weiterbildungen der Erfindung sind in den abhängigen Ansprüchen definiert.

In dem erfindungsgemäßen Verfahren zur Codierung von Symbolen aus einer Folge digitalisierter Bilder sind die Bilder in Bildbereiche unterteilt und die Symbole eines jeweiligen Bildbereichs werden mittels einer Entropiecodierung codiert, wobei die Entropiecodierung auf einem oder mehreren Wahrscheinlichkeitsmodellen beruht. Der Ausdruck Bildbereich ist hier und im Folgenden weit auszulegen und kann Bildabschnitte beliebiger Form betreffen. In einer bevorzugten Variante stellt ein Bildbereich jedoch einen Bildblock, z.B. einen aus der Videocodierung bekannten Makroblock, dar. Diese Wahrscheinlichkeitsmodelle berücksichtigen dabei die Häufigkeiten von in Bildbereichen auftretenden Symbolen. Durch die Wahrscheinlichkeitsmodelle werden somit über entsprechende Auftretenshäufigkeiten die Wahrscheinlichkeiten der entsprechenden Symbole modelliert, wobei mehrere Wahrscheinlichkeitsmodelle dann zum Einsatz kommen, wenn verschiedene Typen von Symbolen mit unterschiedlichen Statistiken eingesetzt werden.

Erfindungsgemäß werden die Bildbereiche in Codierzyklen derart verarbeitet, dass in einem Codierzyklus die Entropiecodierung in mehreren parallelen Codierzweigen erfolgt. Unter parallelen Codierzweigen sind dabei Codierzweige zu verstehen, welche gleichzeitig bzw. zeitlich überlappend Entropiecodierungen von Bildbereichen durchführen. Hierdurch wird eine schnelle Entropiecodierung durch die Verwendung von parallel arbeitenden Entropie-Encodern für jeden Codierzweig erreicht. Erfindungsgemäß wird dabei in einem jeweiligen Codierzweig ein Bildbereich basierend auf einem Satz von Wahrscheinlichkeitsmodellen codiert, wobei ein Satz von Wahrscheinlichkeitsmodellen ein oder mehrere Wahrscheinlichkeitsmodelle umfassen kann. Bei der Codierung eines Bildbereichs in einem jeweiligen Codierzweig werden dabei die Häufigkeiten für den Satz von Wahrscheinlichkeitsmodellen basierend auf den im Bildbereich auftretenden Symbolen adaptiert.

Das erfindungsgemäße Verfahren zeichnet sich dadurch aus, dass der in jedem Codierzweig zur Codierung verwendete Satz von Wahrscheinlichkeitsmodellen auf einem gemeinsamen, für alle Codierzweige gültigen Satz von Wahrscheinlichkeitsmodellen basiert, wobei dieser gemeinsame Satz die Häufigkeiten von Symbolen in den Bildbereichen aller Codierzweige berücksichtigt. Dieser gemeinsame Satz von Wahrscheinlichkeitsmodellen wird dabei in vorbestimmten zeitlichen Abständen basierend auf in zumindest einem zeitlich vorhergehenden Codierzyklus adaptierten Häufigkeiten aktualisiert. Unter "zeitlich vorhergehender Codierzyklus" ist dabei ein Codierzyklus zu verstehen, der (unmittelbar oder auch schon länger zurückliegend) vor der Aktualisierung des gemeinsamen Satzes von Wahrscheinlichkeitsmodellen durchlaufen wurde.

Das erfindungsgemäße Verfahren weist den Vorteil auf, dass zum einen durch die Verwendung von parallelen Codierzweigen eine schnelle Codierung der Symbole erreicht wird und zum anderen durch die Berücksichtigung der Statistik aller Codierzweige in einem gemeinsamen Satz von Wahrscheinlichkeitsmodellen eine hohe Codiereffizienz gewährleistet wird.

Die Aktualisierung des gemeinsamen Satzes von Wahrscheinlichkeitsmodellen kann erfindungsgemäß auf verschiedene Art und Weise erfolgen. In einer Variante wird die Aktualisierung des gemeinsamen Satzes von Wahrscheinlichkeitsmodellen zumindest zeitweise sequentiell derart durchgeführt, dass bei zeitlich aufeinander folgenden Aktualisierungen die adaptierten Häufigkeiten von unterschiedlichen Codierzweigen berücksichtigt werden. Alternativ oder zusätzlich kann die Aktualisierung des gemeinsamen Satzes von Wahrscheinlichkeitsmodellen zumindest zeitweise auch zu vorgegebenen Synchronisationszeitpunkten erfolgen, an denen der gemeinsame Satz von Wahrscheinlichkeitsmodellen basierend auf den adaptierten Häufigkeiten von allen Codierzweigen zumindest eines vorhergehenden Codierzyklus aktualisiert wird.

Der gemeinsame Satz von Wahrscheinlichkeitsmodellen kann in einer Variante der Erfindung basierend auf in dem unmittelbar zeitlich vorhergehenden Codierzyklus adaptierten Häufigkeiten aktualisiert werden. Zur Vermeidung, dass sich die Codierzweige gegenseitig blockieren, besteht ferner die Möglichkeit, dass die Aktualisierung des gemeinsamen Satzes von Wahrscheinlichkeitsmodellen basierend auf in einem nicht unmittelbar zeitlich vorhergehenden Codierzyklus adaptierten Häufigkeiten erfolgt. Auf diese Weise wird die Aktualisierung um einen oder mehrere Codierzyklen verzögert.

In einer weiteren Variante des erfindungsgemäßen Verfahrens werden nach der Codierung eines Bildbereichs in einem jeweiligen Codierzweig die adaptierten Häufigkeiten in einem intermediären, dem jeweiligen Codierzweig zugeordneten Satz von Wahrscheinlichkeitsmodellen zwischengespeichert, wobei bis zur Aktualisierung des gemeinsamen Satzes von Wahrscheinlichkeitsmodellen ein oder mehrere zwischengespeicherte intermediäre Sätze von Wahrscheinlichkeitsmodellen in Kombination mit dem gemeinsamen Satz von Wahrscheinlichkeitsmodellen zur Entropiecodierung im jeweiligen Codierzweig eingesetzt werden. Durch die temporäre Zwischenspeicherung der adaptierten Häufigkeiten können verschiedene Varianten der erfindungsgemäßen Codierung in einfacher Weise realisiert werden.

In dem erfindungsgemäßen Verfahren kann die Entropiecodierung eines jeweiligen Bildbereichs basierend auf beliebigen, aus dem Stand der Technik bekannten Entropiecodierverfahren erfolgen. Insbesondere kann die bereits eingangs erwähnte VLC-Codierung und/oder eine arithmetische Codierung eingesetzt werden. Beispielsweise kann die aus dem Videocodierstandard H.264/AVC bekannte CAVLC-Codierung (CAVLC = Context-based Adaptive Variable Length Coding) bzw. CABAC-Codierung (CABAC = Context-based Adaptive Binary Arithmetic Coding) verwendet werden.

Die Anordnung der Bildbereiche in Codierzweige kann in dem erfindungsgemäßen Verfahren auf verschiedene Art und Weise erfolgen. Insbesondere können die Codierzweige derart ausgestaltet sein, dass ein Codierzyklus durch Bildbereiche gebildet wird, welche gemäß einem zeilen- oder spaltenweisen Verlauf der Bildbereiche in den Bildern aufeinander folgen. Ebenso ist es möglich, dass die Codierzweige derart ausgestaltet sind, dass ein Codierzyklus durch Bildbereiche gebildet wird, welche gemäß einem zickzack-förmigen Verlauf der Bildbereiche in den Bildern aufeinander folgen. Durch die zuletzt genannte Variante kann insbesondere auch eine Codierung unter Berücksichtigung des Kontexts von benachbarten Bildbereichen erreicht werden.

Das erfindungsgemäße Verfahren kann in geeigneter Weise auch mit bekannten Codiervarianten kombiniert werden, bei denen die Bilder in Bildabschnitte unterteilt werden, welche separat entropiecodiert werden. Die Bildabschnitte können dabei zumindest zeitweise ohne Berücksichtigung von Abhängigkeiten zwischen den Bildabschnitten und/oder zumindest zeitweise unter Berücksichtigung von Abhängigkeiten zwischen den Bildabschnitten codiert werden. Eine Ausführungsform einer Codierung ohne Berücksichtigung von Abhängigkeiten stellt die eingangs erwähnte Partitionierung basierend auf Slices dar. Eine Variante einer Codierung unter Berücksichtigung von Abhängigkeiten stellt die eingangs erwähnte Partitionierung von Bildern basierend auf Entropy-Slices dar.

Das erfindungsgemäße Verfahren zur Entropiecodierung kann mit beliebigen, aus dem Stand der Technik bekannten Videocodierverfahren kombiniert werden. Insbesondere können die Symbole aus der Folge digitalisierter Bilder basierend auf dem Standard H.264 generiert werden. Vorzugsweise werden die Symbole aus der Folge digitalisierter Bilder durch eine hinlänglich aus dem Stand der Technik bekannte Transformation, beispielsweise eine DCT-Transformation, und eine ebenfalls aus dem Stand der Technik bekannte Quantisierung von Bildbereichen erzeugt.

Neben dem oben beschriebenen Codierverfahren umfasst die Erfindung ferner ein Decodierverfahren, mit dem die erfindungsgemäß codierten Symbole aus einer Folge digitalisierter Bilder decodiert werden. Dabei werden analog zum Codierverfahren die codierten Bildbereiche in Decodierzyklen derart verarbeitet, dass in einem Decodierzyklus eine Entropiedecodierung in mehreren parallelen Decodierzweigen erfolgt, wobei in einem jeweiligen Decodierzweig ein codierter Bildbereich basierend auf einem Satz von Wahrscheinlichkeitsmodellen decodiert wird, wobei die Häufigkeiten für den Satz von Wahrscheinlichkeitsmodellen bei der Decodierung des codierten Bildbereichs basierend auf den im decodierten Bildbereich auftretenden Symbolen adaptiert werden.

Der in jedem Decodierzweig zur Decodierung verwendete Satz von Wahrscheinlichkeitsmodellen basiert dabei auf einem gemeinsamen, für alle Decodierzweige gültigen Satz von Wahrscheinlichkeitsmodellen, welcher die Häufigkeiten von Symbolen in den decodierten Bildbereichen aller Decodierzweige berücksichtigt. Der gemeinsame Satz von Wahrscheinlichkeitsmodellen wird in vorbestimmten zeitlichen Abständen basierend auf in zumindest einem zeitlich vorhergehenden Decodierzyklus adaptierten Häufigkeiten aktualisiert.

Die Erfindung betrifft darüber hinaus ein Verfahren zur Codierung und Decodierung einer Folge digitalisierter Bilder, wobei Symbole aus der Folge digitalisierter Bilder mit dem oben beschriebenen Codierverfahren codiert werden und anschließend, beispielsweise nach einer Übertragung über eine Übertragungsstrecke, mit dem oben beschriebenen erfindungsgemäßen Decodierverfahren decodiert werden.

Die Erfindung betrifft darüber hinaus eine Vorrichtung zur Codierung von Symbolen aus einer Folge digitalisierter Bilder, wobei die Bilder in Bildbereiche unterteilt sind und die Symbole eines jeweiligen Bildbereichs durch die Vorrichtung mittels einer Entropiecodierung codierbar sind, welche auf einem oder mehreren Wahrscheinlichkeitsmodellen beruht, wobei das oder die Wahrscheinlichkeitsmodelle die Häufigkeiten von in Bildbereichen auftretenden Symbolen berücksichtigen, wobei die Vorrichtung eine Verarbeitungseinheit umfasst, welche beinhaltet:
- ein Mittel zur Einteilung der Bildbereiche in Codierzyklen derart, dass in einem Codierzyklus die Entropiecodierung in mehreren parallelen Codierzweigen erfolgt;
- eine Mehrzahl von Codiermitteln, wobei jedes Codiermittel zur Entropiecodierung eines jeweiligen Codierzweigs derart dient, dass in einem jeweiligen Codierzweig ein Bildbereich basierend auf einem Satz von Wahrscheinlichkeitsmodellen codiert wird, wobei jedes Codiermittel umfasst:
   - ein Adaptionsmittel zur Adaption der Häufigkeiten für den Satz von Wahrscheinlichkeitsmodellen bei der Codierung des Bildbereichs basierend auf den im Bildbereich auftretenden Symbolen,
   - ein Mittel zum Verarbeiten eines gemeinsamen Wahrscheinlichkeitsmodells derart, dass der in dem jeweiligen Codierzweig zur Codierung verwendete Satz von Wahrscheinlichkeitsmodellen auf dem gemeinsamen, für alle Codierzweige gültigen Satz von Wahrscheinlichkeitsmodellen basiert, welcher die Häufigkeiten von Symbolen in den Bildbereichen aller Codierzweige berücksichtigt;
- ein Mittel zur Aktualisierung des gemeinsamen Satzes von Wahrscheinlichkeitsmodellen in vorbestimmten zeitlichen Abständen basierend auf in zumindest einem zeitlich vorhergehenden Codierzyklus adaptierten Häufigkeiten.

Die erfindungsgemäße Codiervorrichtung eignet sich somit zur Codierung der Symbole aus einer Folge digitalisierter Bilder basierend auf dem erfindungsgemäßen Verfahren, wobei insbesondere eine oder mehrere der oben beschriebenen Ausführungsformen des erfindungsgemäßen Verfahrens mit entsprechenden weiteren Mitteln der Codiervorrichtung realisiert werden können.

Neben der Codiervorrichtung umfasst die Erfindung ferner eine entsprechende Decodiervorrichtung zur Decodierung von codierten Symbolen aus einer Folge digitalisierter Bilder, wobei die Bilder in Bildbereiche unterteilt sind und die Symbole eines jeweiligen Bildbereichs mittels einer Entropiecodierung basierend auf dem erfindungsgemäßen Codierverfahren codiert wurden, wobei die Entropiedecodierung auf einem oder mehreren Wahrscheinlichkeitsmodellen beruht, wobei das oder die Wahrscheinlichkeitsmodelle die Häufigkeiten von in decodierten Bildbereichen auftretenden Symbolen berücksichtigen. Die Vorrichtung umfasst dabei eine Verarbeitungseinheit, welche beinhaltet:
- ein Mittel zur Einteilung der codierten Bildbereiche in Decodierzyklen derart, dass in einem Decodierzyklus eine Entropiedecodierung in mehreren parallelen Decodierzweigen erfolgt;
- eine Mehrzahl von Decodiermitteln, wobei jedes Decodiermittel zur Entropiedecodierung eines jeweiligen Decodierzweigs derart dient, dass in dem jeweiligen Decodierzweig ein codierter Bildbereich basierend auf einem Satz von Wahrscheinlichkeitsmodellen decodiert wird, wobei jedes Decodiermittel umfasst:
   - ein Adaptionsmittel zur Adaption der Häufigkeiten für den Satz von Wahrscheinlichkeitsmodellen bei der Decodierung des codierten Bildbereichs basierend auf den im decodierten Bildbereich auftretenden Symbolen,
   - ein Mittel zum Verarbeiten eines gemeinsamen Wahrscheinlichkeitsmodells derart, dass der in dem jeweiligen Decodierzweig zur Decodierung verwendete Satz von Wahrscheinlichkeitsmodellen auf dem gemeinsamen, für alle Decodierzweige gültigen Satz von Wahrscheinlichkeitsmodellen basiert, welcher die Häufigkeiten von Symbolen in den decodierten Bildbereichen aller Decodierzweige berücksichtigt;
- ein Mittel zur Aktualisierung des gemeinsamen Satzes von Wahrscheinlichkeitsmodellen in vorbestimmen zeitlichen Abständen basierend auf in zumindest einem zeitlich vorhergehenden Decodierzyklus adaptierten Häufigkeiten.

Die Erfindung umfasst neben der oben beschriebenen Codiervorrichtung und der oben beschriebenen Decodiervorrichtung auch einen Codec bzw. ein System zur Codierung und Decodierung von Symbolen aus einer Folge digitalisierter Bilder, wobei der Codec sowohl die erfindungsgemäße Codiervorrichtung als auch die erfindungsgemäße Decodiervorrichtung beinhaltet. Ausführungsbeispiele der Erfindung werden nachfolgend anhand der beigefügten Figuren detailliert beschrieben.

Es zeigen:
- Fig. 1A bis 1C sowie Fig. 2A und 2B: verschiedene, aus dem Stand der Technik bekannte Codiertechniken;
- Fig. 3: eine Prinzipdarstellung eines Ver- fahrens zur Videocodierung und Vi- deodecodierung, in dem die erfin- dungsgemäße Entropiecodierung bzw. Entropiedecodierung eingesetzt wer- den kann;
- Fig. 4A und 4B: zwei Varianten der parallelen Verar- beitung von Makroblöcken basierend auf dem erfindungsgemäßen Verfahren;
- Fig. 5 bis Fig. 8: verschiedene Varianten des erfin- dungsgemäßen Codierverfahrens mit unterschiedlichen Aktualisierungen des gemeinsamen Wahrscheinlichkeits- modells;
- Fig. 9: eine Decodierung von Symbolen, wel- che mit der Variante des Verfahrens gemäß Fig. 5 codiert wurden; und
- Fig. 10: eine schematische Darstellung einer Ausführungsform eines erfindungsge- mäßen Codier- und Decodiersystems.

Die Varianten von aus dem Stand der Technik bekannten Codierungen gemäß Fig. 1A bis 1C sowie Fig. 2A und 2B wurden bereits weiter oben erläutert, so dass auf eine nochmalige Beschreibung dieser Figuren verzichtet wird.

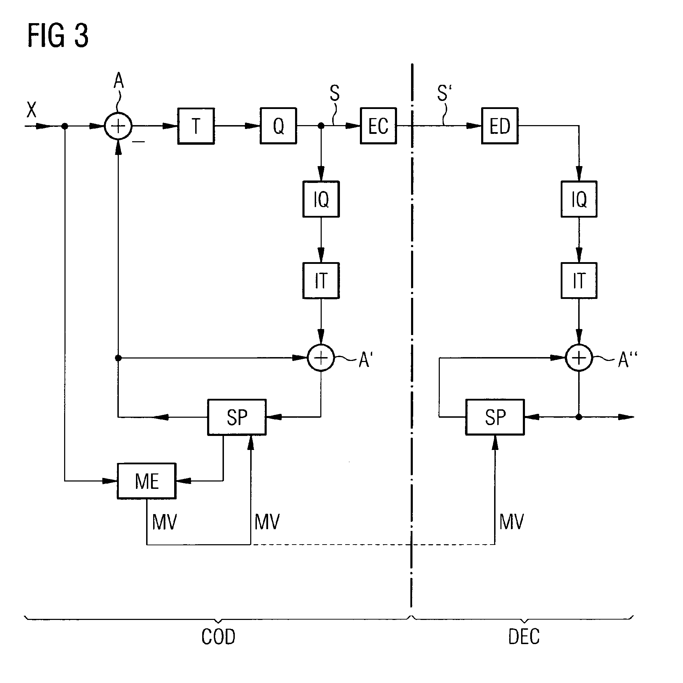

Die nachfolgend beschriebenen Ausführungsformen des erfindungsgemäßen Entropiecodier- bzw. Entropiedecodier-Verfahrens zeichnen sich dadurch aus, dass parallel mehrere Bildbereiche in unterschiedlichen Codierzweigen verarbeitet werden, wobei die einzelnen Codierzweige jedoch auf ein gemeinsames Wahrscheinlichkeitsmodell zugreifen, welches die Häufigkeitsverteilungen der Symbole aller Codierzweige berücksichtigt. Dieses Wahrscheinlichkeitsmodell wird in regelmäßigen Abständen basierend auf den sich verändernden Häufigkeiten von zu codierenden bzw. decodierten Symbolen aktualisiert. Die Symbole werden dabei im Rahmen eines Videocodierverfahrens erzeugt, wobei ein solches Verfahren schematisch in Fig. 3 dargestellt ist.

Der linke Teil der Fig. 3 zeigt einen entsprechenden Codierer COD und der rechte Teil der Fig. 3 den zur Decodierung verwendeten Decoder DEC. Gemäß Fig. 3 wird ein Videostrom aus digitalisierten Bildern I einer Codierung unterzogen, bei der ein Prädiktionsfehlersignal, welches sich aus der Differenz zwischen Eingangssignal I und bewegungskompensierter Rekonstruktion des vorherigen Bilds ergibt, komprimiert wird. Der Prädiktionsfehler, der in Fig. 3 im Addierer A als Differenz aus eingelesenem Bild und prädiziertem Bild ermittelt wurde, wird einer Transformation T, insbesondere einer DCT-Transformation (DCT = Discrete Cosine Transformation), unterzogen. Die hierdurch erhaltenen Transformationskoeffizienten werden anschließend in geeigneter Weise in dem Quantisierer Q quantisiert. Auf diese Weise werden für entsprechende Bildbereiche in der Form von Makroblocks jeweilige Symbole S erhalten, welche codierte Bildinformationen aus dem Bildbereich repräsentieren, insbesondere in der Form von Transformationskoeffizienten und zur Prädiktion verwendeter Bewegungsvektoren sowie weiterer Codierparameter. Die im Rahmen der Codierung ermittelten Bewegungsvektoren sind dabei mit MV bezeichnet, und diese Bewegungsvektoren werden auch bei der Decodierung benötigt, wie durch eine vertikal verlaufende, gestrichelte Linie in Fig. 3 angedeutet ist. Um die Codiereffizienz weiter zu erhöhen, werden die Symbole S nochmals in einem Entropiecodierer EC verlustlos entropiecodiert, wobei erfindungsgemäß eine spezielle Variante der Entropiecodierung verwendet wird.

Wie sich aus Fig. 2 ergibt, werden die quantisierten Symbole S im Rahmen der Codierung auch einer inversen Quantisierung IQ und einer inversen Transformation IT unterzogen. Das hierdurch generierte Signal gelangt schließlich in einen Bildspeicher SP, dessen Ausgang einmal über den Addierer A' auf den Eingang rückgekoppelt ist, wobei der Ausgang ferner negativ auf den Eingang der Transformation T über den Addierer A gelangt. Der Bildspeicher SP steuert dabei einen Bewegungsschätzer ME, der seinerseits eingangsseitig mit den Videoeingangsdaten beaufschlagt wird und die bereits oben erwähnten Bewegungsvektoren MV zur Ansteuerung des Bildspeichers SP im Codierer COD bereitstellt. Wie bereits erläutert, werden diese Bewegungsvektoren auch an den Decoder DEC übertragen, wobei die Bewegungsvektoren hierfür auch entropiecodiert werden, was aus Fig. 1 nicht ersichtlich ist. Die durch den Entropiecodierer erzeugten Codewörter S' werden schließlich an den Decoder DEC übertragen und dort zunächst einer geeigneten erfindungsgemäßen Entropiedecodierung unterzogen. Hierdurch werden die encoderseitig generierten Symbole S wieder rekonstruiert, welche anschließend einer inversen Quantisierung IQ und einer inversen Transformation IT unterzogen werden. Die so ermittelten decodierten Videodaten werden anschließend mit den Daten eines entsprechenden Bildspeichers SP auf Seiten des Decoders DEC addiert und stellen den Ausgang des Decoders dar. Dieses Summensignal wird außerdem dem decoderseitigen Bildspeicher SP zugeführt, dessen Ausgang auf den Eingang des Addierers A" zurückgeführt ist.

Im Folgenden werden Ausführungsformen der erfindungsgemäßen Entropiecodierung und Entropiedecodierung basierend auf den Symbolen jeweiliger Makroblocks in entsprechenden Videobildern beschrieben. In den hier dargelegten Varianten werden drei Codierzweige in einem entsprechenden Codierzyklus codiert, wobei in jedem Codierzweig eines Codierzyklus ein Makroblock entropiecodiert wird. Die einzelnen Codierzweige stellen somit verschiedene Gruppen von Makroblocks dar, welche je nach Ausführungsform verschiedene Bestandteile des Bilds sind.

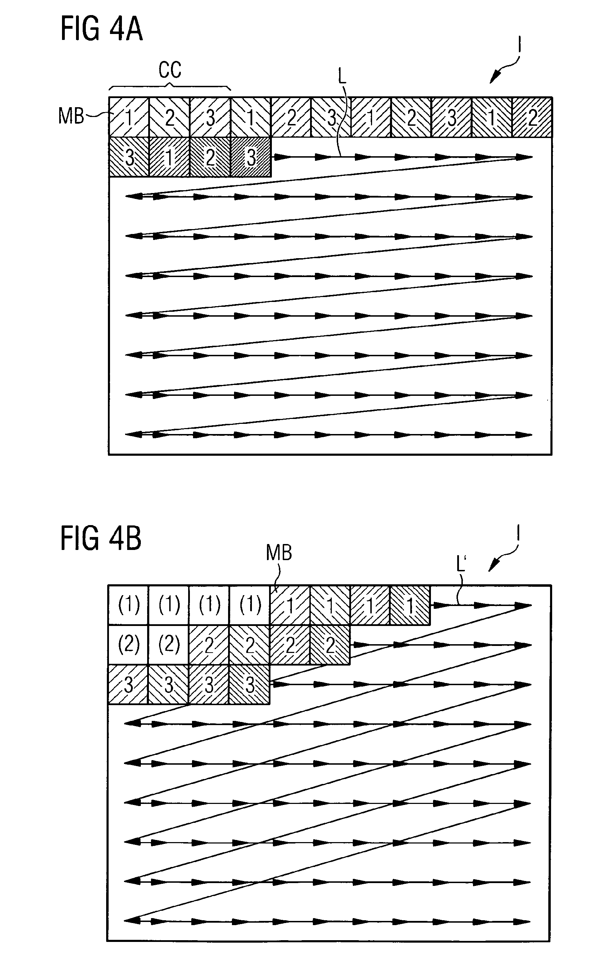

Fig. 4A zeigt eine erste Variante einer Gruppierung von Makroblocks MB in drei Codierzweige. Die Makroblocks des ersten Codierzweigs werden dabei mit Bezugszeichen 1, die Makroblocks des zweiten Codierzweigs mit Bezugszeichen 2 und die Makroblocks des dritten Codierzweigs mit Bezugszeichen 3 spezifiziert. Diese Bezugszeichen werden auch zur Bezeichnung der entsprechenden Codierzweige verwendet. Ein Codierzyklus CC wird in der Ausführungsform der Fig. 4A durch drei aufeinander folgende Makroblocks 1, 2 und 3 gebildet. Das Bild wird zur Codierung somit Zeile für Zeile eingelesen, wie durch die Linie L in Fig. 4A angedeutet ist. Die Gruppierung gemäß Fig. 4A eignet sich dabei zu einer Entropiecodierung, bei der keine Information von benachbarten Makroblocks zur Modellierung des Kontexts verwendet wird.

Im Unterschied hierzu zeigt Fig. 4B eine weitere Variante der Ausbildung von Codierzweigen, bei der eine Kontextmodellierung basierend auf Informationen von benachbarten Makroblocks ermöglicht wird. Die Codierzweige werden dabei durch jeweilige benachbarte Zeilen des Bilds I gebildet, wobei in Fig. 4B die erste Zeile den ersten Codierzweig 1, die zweite Zeile den zweiten Codierzweig 2 und die dritte Zeile den dritten Codierzweig 3 bildet. Die Verarbeitung der einzelnen Codierzweige erfolgt überlappend, wobei die Codierung in einem Codierzweig zum Codierzweig der nächsten Zeile um zwei Makroblocks zeitversetzt ist, was durch die Linie L' angedeutet wird. Fig. 4B zeigt dabei ein Szenario, bei dem einige Makroblocks schon codiert sind, wobei diese Makroblocks durch entsprechende Bezugszeichen in Klammern angedeutet sind. Die Codierung erfolgt wiederum in parallelen Codierzweigen, wobei in einem Codierzyklus nunmehr um zwei Makroblocks zueinander versetzte Makroblocks aus jeweiligen Codierzweigen verarbeitet werden. Die aufeinander folgenden Codierzweige werden somit gemäß einem zickzack-förmigen Verlauf der Makroblocks im Bild gebildet. Ein der Fig. 4A entsprechender Codierzyklus CC wird in Fig. 4B z.B. durch den fünften Makroblock 1 in der ersten Zeile des Bilds I, den dritten Markoblock 2 in der zweiten Zeile des Bilds I sowie den ersten Makroblock 3 in der dritten Zeile des Bilds I gebildet.

Wie bereits erwähnt, kann mit der in Fig. 4B gezeigten Ausführungsform eine Modellierung eines Kontexts basierend auf benachbarten Makroblocks erreicht werden. Nichtsdestotrotz kann diese Ausführungsform auch bei einem Verfahren zur Codierung ohne Kontextmodellierung verwendet werden. Neben den in Fig. 4A und 4B gezeigten Gruppierungen von Makroblocks in parallel verarbeiteten Codierzweigen sind auch gegebenenfalls andere Gruppierungen denkbar. Entscheidend ist im Rahmen der Erfindung lediglich, dass alle Codierzweige bei der Durchführung der Entropiecodierung auf einen gemeinsamen Satz von Wahrscheinlichkeitsmodellen zugreifen, wie im Folgenden noch näher erläutert wird.

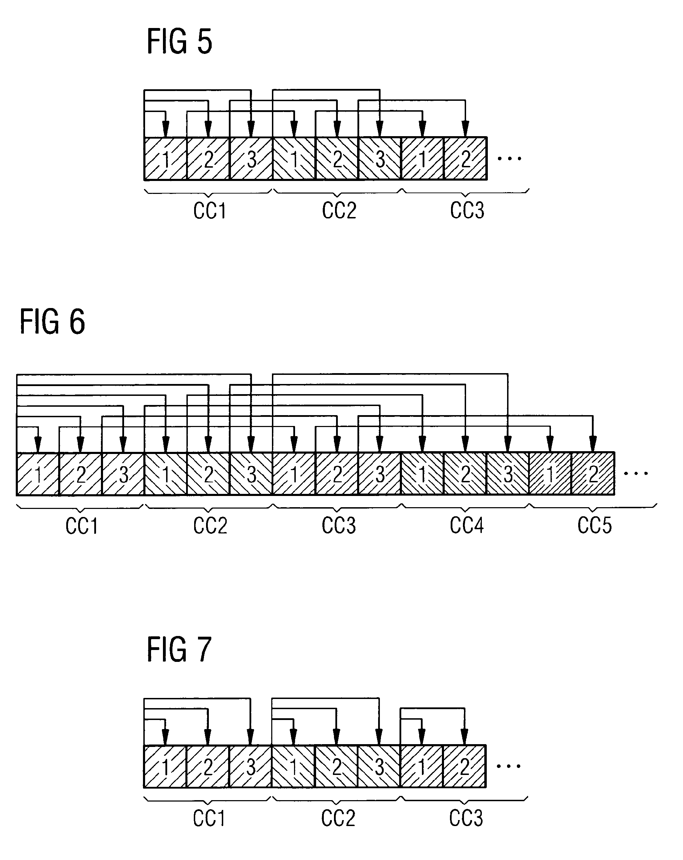

Fig. 5 bis Fig. 8 zeigen verschiedene Varianten der erfindungsgemäßen Entropiecodierung mit unterschiedlichen Arten der Aktualisierung eines gemeinsamen Satzes von Wahrscheinlichkeitsmodellen. Ohne Beschränkung der Allgemeinheit sind dabei die einzelnen Codierzweige basierend auf der zeilenweisen Verarbeitung von Makroblocks gemäß Fig. 4A gebildet. Im Rahmen der Entropiecodierung eines Makroblocks werden dabei die Häufigkeiten der Symbole basierend auf einem Satz von Wahrscheinlichkeitsmodellen berücksichtigt, wobei ein Satz ein oder mehrere Wahrscheinlichkeitsmodelle enthalten kann. Jedes Wahrscheinlichkeitsmodell berücksichtigt dabei einen Kontext (d.h. einen entsprechenden Typ von Symbolen und/oder Codierentscheidungen schon codierter Blöcke). Beispielsweise können unterschiedliche Wahrscheinlichkeitsmodelle für unterschiedlich zu codierende Informationen, wie z.B. für Transformationskoeffizienten, Bewegungsvektoren sowie Codiermodus-Informationen, eingesetzt werden.

Die Entropiecodierung eines Makroblocks in einem einzelnen Codierzweig wird basierend auf einem gängigen Entropiecodierverfahren durchgeführt, beispielsweise basierend auf der eingangs erwähnten VLC-Codierung bzw. einer arithmetischen Codierung. Insbesondere können die aus dem Stand der Technik bekannten Codierverfahren CABAC bzw. CAVLC eingesetzt werden. Die Entropiecodierung in einem einzelnen Codierzweig läuft somit basierend auf bekannten Verfahren ab, jedoch wird bei dieser Entropiecodierung in geeigneter Weise ein gemeinsamer Satz von Wahrscheinlichkeitsmodellen verwendet, bei dem die Häufigkeiten der Symbole von allen parallelen Codierzweigen berücksichtigt werden.

In allen nachfolgend beschriebenen Figuren 5 bis 8 wird durch entsprechende Pfeile angedeutet, auf welchen Satz von Wahrscheinlichkeitsmodellen ein gerade codierter Makroblock zurückgreift. Dabei wird im Rahmen der Entropiecodierung der einzelnen Makroblocks der jeweilige, zur Entropiecodierung verwendete Satz von Wahrscheinlichkeitsmodellen adaptiert und in einem intermediären Satz von Wahrscheinlichkeitsmodellen gespeichert, wobei die intermediären Sätze von Wahrscheinlichkeitsmodellen im Laufe des Verfahrens nach einer Aktualisierung des bereits oben erwähnten gemeinsamen Satzes an Wahrscheinlichkeitsmodellen wieder verworfen werden. Im Folgenden werden die intermediären Sätze von Wahrscheinlichkeitsmodellen als Schattensätze bezeichnet.

Fig. 5 zeigt eine Variante der erfindungsgemäßen Entropiecodierung, bei der der gemeinsame Satz von Wahrscheinlichkeitsmodellen sequentiell durch die adaptierten Häufigkeiten der einzelnen Codierzweige angepasst wird. Der Ursprung eines Pfeils zeigt dabei in Fig. 5 und auch in allen weiteren Fig. 6 bis 9 an, auf welchen Satz von Wahrscheinlichkeitsmodellen für denjenigen (gerade codierten) Makroblock zugegriffen wird, an dem sich die Spitze des entsprechenden Pfeils befindet. In der Ausführungsform der Fig. 5 werden zunächst die Symbole für den Makroblock von jedem der Codierzweige 1 bis 3 im Codierzyklus CC1 codiert. Es werden dabei unabhängige adaptive Entropiecodierer für jeden der Zweige verwendet. Da es sich in jedem Codierzweig im den ersten codierten Makroblock handelt, werden bei der Codierung die gleichen initialen Standardstatistiken (d.h. Wahrscheinlichkeitsmodelle) für alle Codierzweige verwendet. Im Rahmen der Codierung jedes Codierzweigs wird der ursprüngliche Satz von Wahrscheinlichkeitsmodellen basierend auf den entsprechenden Häufigkeiten der Symbole in jedem Codierzweig angepasst, so dass für jeden Codierzweig ein erster Schattensatz von Wahrscheinlichkeitsmodellen generiert wird. Diese Schattensätze von Wahrscheinlichkeitsmodellen müssen dabei nur die modifizierten Wahrscheinlichkeitsmodelle der entsprechenden Symboltypen enthalten. Nicht-modifizierte Wahrscheinlichkeitsmodelle müssen nicht gespeichert werden. Die ursprüngliche Standard-Statistik stellt die erste Version eines gemeinsamen Satzes von Wahrscheinlichkeitsmodellen dar, welche im Laufe der Codierung dann aktualisiert wird.

In der Ausführungsform der Fig. 5 erfolgt nach der Codierung des Makroblocks 1 im ersten Codierzyklus CC1 bereits die Codierung des Makroblocks 1 im nachfolgenden Codierzyklus CC2, ohne dass auf die Beendigung der Codierung der Makroblocks 2 und 3 im Codierzyklus CC1 gewartet werden muss. Dabei wird im Rahmen der Codierung des Makroblocks 1 im zweiten Codierzyklus CC2 ein zweiter Schattensatz von Wahrscheinlichkeitsmodellen generiert, welcher die Änderung gegenüber dem ersten Schattensatz von Wahrscheinlichkeitsmodellen speichert. Die Codierentscheidungen werden basierend auf dem ursprünglichen gemeinsamen Satz von Wahrscheinlichkeitsmodellen sowie dem ersten und zweiten Schattensatz von Wahrscheinlichkeitsmodellen getroffen.

Nach Abschluss der Codierung der Makroblocks 2 und 3 im ersten Codierzyklus CC1 wird der gemeinsame Satz von Wahrscheinlichkeitsmodellen mit dem ersten Schattensatz von Wahrscheinlichkeitsmodellen aktualisiert, der bei der Codierung des Makroblocks 1 im Codierzyklus CC1 generiert wurde. Dieser erste Schattensatz von Wahrscheinlichkeitsmodellen kann dann verworfen werden. Schließlich erfolgt die Codierung des Makroblocks 2 im zweiten Codierzyklus CC2, wobei nunmehr auf den aktualisierten gemeinsamen Satz von Wahrscheinlichkeitsmodellen zurückgegriffen wird. Dabei wird bei der Codierung des Makroblocks wiederum ein zuvor erzeugter erster Schattensatz von Wahrscheinlichkeitsmodellen berücksichtigt, der bei der Codierung des entsprechenden Makroblocks 2 im ersten Codierzyklus CC1 generiert wurde. Analog zu dem Makroblock 1 im zweiten Codierzweig CC2 wird bei der Codierung des Makroblocks 2 im zweiten Codierzyklus CC2 nunmehr ein weiterer zweiter Schattensatz von Wahrscheinlichkeitsmodellen generiert, wobei die Codierung des Makroblocks 2 im Codierzyklus CC2 auf dem aktualisierten gemeinsamen Satz von Wahrscheinlichkeitsmodellen sowie dem ersten und zweiten Schattensatz von Wahrscheinlichkeitsmodellen beruht.

Sobald der Makroblock 1 im zweiten Codierzyklus CC2 codiert wurde, kann der gemeinsame Satz von Wahrscheinlichkeitsmodellen mit dem ersten Schattensatz von Wahrscheinlichkeitsmodellen aus der Codierung des Makroblocks 2 im ersten Codierzyklus CC1 aktualisiert werden. Analog wird nach der Codierung des Makroblocks 2 im zweiten Codierzyklus CC2 der gemeinsame Satz von Wahrscheinlichkeitsmodellen mit dem ersten Schattensatz von Wahrscheinlichkeitsmodellen aus der Codierung des Makroblocks 3 im ersten Codierzyklus CC1 aktualisiert. Das Verfahren wird auf diese Weise fortgesetzt, bis alle Makroblocks codiert sind.

Wie sich aus der obigen Beschreibung des Ausführungsbeispiels der Fig. 5 ergibt, kann die Codierung des Makroblocks 2 im Codierzweig CC2 erst dann beginnen, wenn der gemeinsame Satz von Wahrscheinlichkeitsmodellen mit dem ersten Schattensatz von Wahrscheinlichkeitsmodellen aus der Codierung des Makroblocks 1 im Codierzyklus CC1 aktualisiert wurde. Diese Aktualisierung kann jedoch erst dann durchgeführt werden, wenn der Makroblock 3 im ersten Codierzyklus CC1 fertig codiert wurde, da sonst im Codierzweig 3 mit falschen Statistiken operiert wird.

In einer Weiterbildung des obigen Verfahrens werden deshalb neben den Schattensätze von Wahrscheinlichkeitsmodellen, welche für bestimmte Codierzweige spezifisch sind, auch temporäre Sätze von Wahrscheinlichkeitsmodellen für den gemeinsamen Satz von Wahrscheinlichkeitsmodellen unter Berücksichtigung eines oder mehrerer, bereits codierter Schattensätze von Wahrscheinlichkeitsmodellen generiert. Auf diese Weise kann eine Codierung in einem Codierzweig eines neuen Codierzyklus basierend auf einem entsprechenden temporären Satz von Wahrscheinlichkeitsmodellen durchgeführt werden, auch wenn in einem Codierzweig des vorhergehenden Codierzyklus noch eine Codierung stattfindet. Sobald die Codierungen in den Codierzweigen des vorhergehenden Codierzyklus abgeschlossen sind und der gemeinsame Satz von Wahrscheinlichkeitsmodellen aktualisiert wurde, wird der entsprechende temporäre Satz von Wahrscheinlichkeitsmodellen nicht mehr benötigt. Die entsprechend generierten temporären Sätze von Wahrscheinlichkeitsmodellen müssen dabei nicht komplett generiert werden, sondern es ist ausreichend, nur diejenigen Wahrscheinlichkeitsmodelle zu berechnen, in denen sich die Häufigkeiten der Symbole verändert haben.

Die oben beschriebene Variante der sequentiellen Aktualisierung des gemeinsamen Satzes von Wahrscheinlichkeitsmodellen kann in geeigneter Weise auch als verzögerte Aktualisierung ausgebildet sein, bei der der gemeinsame Satz von Wahrscheinlichkeitsmodellen nicht mit entsprechenden Schattensätze von Wahrscheinlichkeitsmodellen des vorhergehenden Zyklus, sondern eines noch weiter zurückliegenden Zyklus aktualisiert wird. Eine solche Variante der Erfindung ist in Fig. 6 gezeigt. Man erkennt hierbei, dass für den ersten und zweiten Codierzyklus CC1 und CC2 zunächst ein initialer Satz von Standard-Wahrscheinlichkeitsmodellen verwendet wird und erst ab dem dritten Codierzyklus eine entsprechende Aktualisierung des gemeinsamen Satzes von Wahrscheinlichkeitsmodellen mit im Laufe der Codierung erzeugter Schattensätze von Wahrscheinlichkeitsmodellen aus dem ersten Codierzyklus CC1 durchgeführt wird. Ebenso wird der gemeinsame Satz von Wahrscheinlichkeitsmodellen im vierten Codierzyklus CC4 mit Schattensätze von Wahrscheinlichkeitsmodellen aus dem zweiten Codierzyklus CC2 und der gemeinsame Satz von Wahrscheinlichkeitsmodellen im fünften Codierzyklus CC5 mit Schattensätze von Wahrscheinlichkeitsmodellen aus dem dritten Codierzyklus CC3 aktualisiert. Der Vorteil der Variante der Fig. 6 besteht darin, dass sich im Regelfall die Codierzweige gegenseitig nicht blockieren. Ferner werden auch nur zwei Schattensätze von Wahrscheinlichkeitsmodellen benötigt, falls die Aktualisierung um einen Codierzyklus verzögert ist, wie dies in Fig. 6 angedeutet ist. Falls die Verzögerung mehr als einen Codierzyklus beträgt, werden zusätzliche Schattensätze von Wahrscheinlichkeitsmodellen benötigt. Je größer die Verzögerung der Aktualisierung ist, umso mehr kann eine Abweichung in der Geschwindigkeit der Codierzweige toleriert werden, ohne dass sich die Codierzweige gegenseitig blockieren. Aufgrund der verzögerten Aktualisierung der Statistiken ist jedoch die Codiereffizienz etwas verschlechtert.

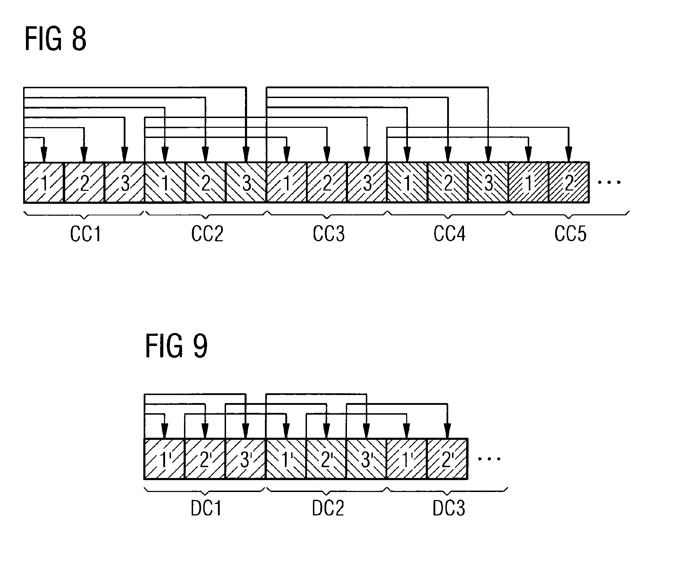

Fig. 7 zeigt eine dritte Variante einer Aktualisierung des gemeinsamen Satzes an Wahrscheinlichkeitsmodellen. In dieser Variante wird nach Abschluss der einzelnen Codierungen in jedem Codierzyklus zu einem festen Synchronisationszeitpunkt der gemeinsame Satz von Wahrscheinlichkeitsmodellen mit allen, für jeden Codierzweig generierten Schattensätze von Wahrscheinlichkeitsmodellen aktualisiert. Auf diese Weise wird die Erzeugung von mehreren Schattensätze von Wahrscheinlichkeitsmodellen pro Codierzweig vermieden. Jedoch ist die Codiergeschwindigkeit eines Codierzyklus durch den langsamsten Codierzweig bestimmt. Die Synchronisationszeitpunkte müssen dabei nicht nach Beendigung jedes Codierzyklus gesetzt werden. Vielmehr besteht auch die Möglichkeit, dass nach einer vorbestimmten Anzahl von Codierzyklen eine Aktualisierung durchgeführt wird. Diese Variante hat den Vorteil, dass der gemeinsame Satz von Wahrscheinlichkeitsmodellen nicht mehr so oft aktualisiert werden muss und eine größere Abweichung in den Geschwindigkeiten der Codierzweige toleriert wird. Fig. 8 zeigt eine solche Variante der Aktualisierung von Codierzweigen, bei der die Aktualisierung immer erst nach zwei Codierzyklen erfolgt. Man erkennt in Fig. 8 insbesondere, dass für die Codierzyklen CC1 und CC2 jeweils der gleiche gemeinsame Satz von Wahrscheinlichkeitsmodellen verwendet wird, wobei eine Aktualisierung dieses gemeinsamen Satzes von Wahrscheinlichkeitsmodellen unter Berücksichtigung der Schattensätze des ersten Codierzyklus CC1 zu Beginn des Codierzyklus CC3 durchgeführt wurde.

Eine Decodierung der mit den im Vorangegangenen beschriebenen Verfahren codierten Symbole läuft analog zur Codierung ab. Das heißt, die Decodierung wird in parallelen Decodierzweigen durchgeführt, wobei der gemeinsame Satz von Wahrscheinlichkeitsmodellen wiederum basierend auf den Häufigkeiten der decodierten Symbole aktualisiert wird. Im Folgenden wird ein Decodierprozess beispielhaft basierend auf codierten Symbolen beschrieben, welche mit dem Codierprozess gemäß Fig. 5 erzeugt wurden. Dieser Decodierprozess ist in Fig. 9 wiedergegeben, wobei wiederum durch entsprechende Pfeile angedeutet wird, auf welchem Satz von Wahrscheinlichkeitsmodellen ein gerade decodierter Makroblock zugreift. Die Decodierung erfolgt in entsprechenden Decodierzyklen DC1, DC2, DC3 usw., innerhalb welcher nunmehr parallel entsprechenden Decodierzweige 1', 2' und 3' ausgeführt werden, mit denen die entsprechend codierten Makroblocks decodiert werden. Jeder der Decodierzweige 1', 2' und 3' wird somit in einem separaten Decodierprozess decodiert. Dabei werden zunächst die Makroblocks im ersten Decodierzyklus DC1 mit dem geeigneten initialen Satz von Standard-Wahrscheinlichkeitsmodellen decodiert. Die sich bei der Decodierung ergebenden Aktualisierungen der Häufigkeiten der decodierten Symbole werden wiederum in individuellen Schattensätzen von Wahrscheinlichkeitsmodellen gespeichert.

Nach der Decodierung des Makroblocks 1' im ersten Decodierzyklus DC1 erfolgt die Decodierung des Markoblocks 1' im zweiten Decodierzyklus DC2 unter der Verwendung eines zweiten Schattensatzes von Wahrscheinlichkeitsmodellen. Wenn die Entropiedecodierung für die Makroblocks 2' und 3' im ersten Decodierzyklus DC1 abgeschlossen ist, wird der gemeinsame Satz von Wahrscheinlichkeitsmodellen analog wie bei der Codierung mit dem ersten Schattensatz von Wahrscheinlichkeitsmodellen des Makroblocks 1' im Decodierzyklus DC1 aktualisiert.

Schließlich erfolgt die Decodierung des Markoblocks 2' des zweiten Codierzyklus DC2, wobei hierfür nunmehr der aktualisierte gemeinsame Satz von Wahrscheinlichkeitsmodellen verwendet wird. Alternativ kann die Entropiedecodierung des Makroblocks 2' im Decodierzyklus DC2 auch vor der Durchführung der Aktualisierung gestartet werden, falls ein temporärer Satz von Wahrscheinlichkeitsmodellen aus dem gemeinsamen Satz von Wahrscheinlichkeitsmodellen und dem ersten Schattensatz von Wahrscheinlichkeitsmodellen des Makroblocks 1' im Decodierzyklus DC1 generiert wird. Auf ähnliche Weise beginnt der Decodierzweig 3' die Decodierung, falls der gemeinsame Satz von Wahrscheinlichkeitsmodellen mit dem ersten Schattensatz von Wahrscheinlichkeitsmodellen des Makroblocks 2' im ersten Decodierzyklus DC1 aktualisiert wurde. Alternativ kann ein temporärer Satz von Wahrscheinlichkeitsmodellen zur Decodierung des Markoblocks 3' im zweiten Decodierzyklus DC2 verwendet werden, falls die Decodierung der Makroblocks 1' und 2' im ersten Decodierzyklus DC1 abgeschlossen wurde. Die Codierung wird basierend auf den obigen Schritten für alle weiteren Codierzyklen mit entsprechenden Aktualisierungen fortgesetzt, bis alle Makroblocks decodiert sind.

Die Hauptparameter, welche bei der Umsetzung der oben beschriebenen Verfahren dem Decoder signalisiert werden müssen, sind zum einen die Anzahl N an parallelen Codierzweigen, wobei diese Anzahl in den Beispielen der Fig. 3 bzw. Fig. 8 N = 3 ist. Für den Fall N = 1 entspricht das Verfahren einer konventionellen Entropiecodierung, wie sie beispielsweise im Standard H.264/AVC verwendet wird. Als weiterer Parameter ist die Verzögerung D der Aktualisierung des gemeinsamen Satzes von Wahrscheinlichkeitsmodellen zu übertragen. Dieser Parameter ist D = 0 Codierzyklen in den Ausführungsformen der Fig. 5 und Fig. 7. Für die Ausführungsformen der Fig. 6 und Fig. 8 gilt D = 1. Ebenso ist als Parameter zu übermitteln, ob eine synchronisierte Aktualisierung zu vorbestimmten Synchronisationszeitpunkten durchgeführt wird. In den Ausführungsformen der Fig. 7 und Fig. 8 wird eine synchronisierte Aktualisierung signalisiert, wohingegen in den Ausführungsformen der Fig. 5 und Fig. 6 signalisiert wird, dass keine synchronisierte Aktualisierung durchgeführt wird.

Die im Vorangegangenen beschriebenen Varianten des erfindungsgemäßen Verfahrens können mit geeigneten Methoden der Modellierung von Kontexten, wie den oben beschriebenen Entropie-Slices, den geordneten Entropie-Slices bzw. den Interleaved Entropy-Slices kombiniert werden. Ebenso kann das erfindungsgemäße Verfahren mit der oben beschriebenen Syntax-Element-Partitionierung bzw. der parallelen Verarbeitung von mehreren binären Symbolen gemäß Druckschriften [3] und [4] kombiniert werden.

In der Regel muss die Aktualisierung des gemeinsamen Satzes von Wahrscheinlichkeitsmodellen dann durchgeführt werden, wenn die Entropiecodierung in den einzelnen Codierzweigen pausiert. Gegebenenfalls besteht jedoch auch die Möglichkeit, dass einzelne Wahrscheinlichkeitsmodelle in dem gemeinsamen Satz von Wahrscheinlichkeitsmodellen in atomarer Weise aktualisiert werden. In diesem Fall können die einzelnen Codierzweige ihre Codierung ohne Unterbrechung fortsetzen. Eine Aktualisierung in atomarer Weise bedeutet dabei, dass bei der Aktualisierung eines Wahrscheinlichkeitsmodells ein Lesezugriff auf dieses Modell durch die Codierzweige unterbunden wird und nach der Aktualisierung des Wahrscheinlichkeitsmodells das entsprechende Wahrscheinlichkeitsmodell aus dem Schattensatz der Wahrscheinlichkeitsmodelle der Codierzweige gelöscht wird.

Die im Vorangegangenen beschriebenen Ausführungsformen des erfindungsgemäßen Verfahrens wurden basierend auf der Codierung einzelner Makroblocks beschrieben. Das Verfahren ist jedoch auch auf beliebige andere Bildbereiche innerhalb einer zu codierenden Bilderfolge anwendbar und nicht auf Makroblöcke beschränkt.

Das erfindungsgemäße Verfahren weist eine Reihe von Vorteilen auf. Insbesondere wird eine hohe Kompressionseffizienz erreicht, da ein gemeinsamer, für alle Codierzweige gültiger Satz von Wahrscheinlichkeitsmodellen verwendet wird, welcher in regelmäßigen Abständen mit dem adaptierten Statistiken der Codierzweige aktualisiert wird. Somit ist die Statistik in dem gemeinsamen Satz von Wahrscheinlichkeitsmodellen besser an die tatsächlichen Wahrscheinlichkeiten angenähert, als wenn separate unabhängige Sätze von Wahrscheinlichkeitsmodellen verwendet werden. Durch die parallele Codierung bzw. Decodierung mehrerer Codier- bzw. Decodierzweige wird ferner eine schnelle Codierung und Decodierung mit geringer Verzögerung erreicht. Darüber hinaus kann das erfindungsgemäße Verfahren auch in geeigneter Weise mit anderen parallelen Verarbeitungsverfahren zur kontextbasierten adaptiven Entropiecodierung kombiniert werden.

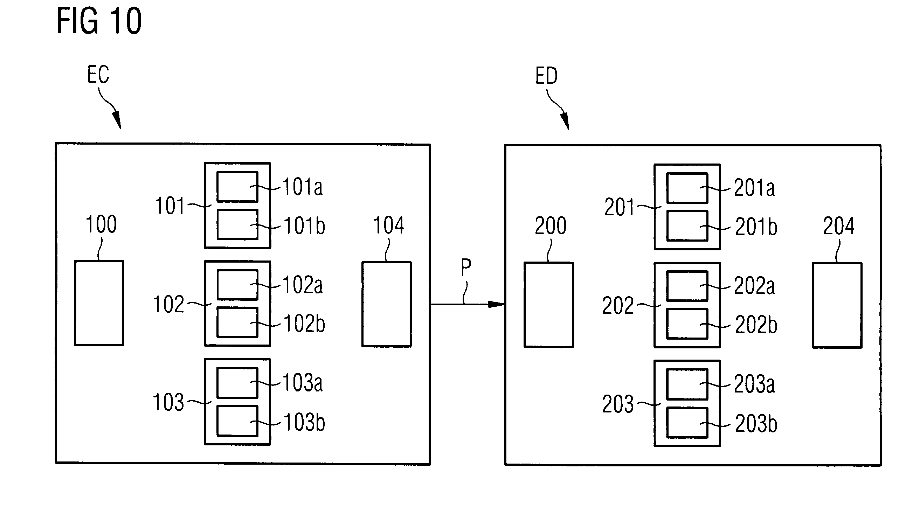

Fig. 10 zeigt in schematischer Darstellung eine konkrete Ausgestaltung eines Systems aus einer erfindungsgemäßen Codiervorrichtung und einer erfindungsgemäßen Decodiervorrichtung. Die Codiervorrichtung dient zur Entropiecodierung einer Folge von digitalisierten Bildern und ist analog zu Fig. 3 mit EC bezeichnet. Die Decodiervorrichtung dient zur Decodierung der mit der Vorrichtung EC entropiecodierten Folge digitalisierter Bilder und ist in Analogie zu Fig. 3 mit ED bezeichnet. Sowohl die Vorrichtung EC als auch die Vorrichtung ED beinhaltet eine Mehrzahl von Komponenten, welche als einzelne Hardwarekomponenten, beispielsweise als Hardwarekomponenten in einem Computer, ausgestaltet sein können. In gleicher Weise beinhaltet auch die Vorrichtung ED eine Mehrzahl von Komponenten, welche als einzelne Hardwarekomponenten, z.B. als Hardwarekomponenten in einem Computer, ausgestaltet sein können.

Die Vorrichtung EC kann neben den in Fig. 10 dargestellten Komponenten gegebenenfalls als zusätzliche Komponenten die in Fig. 3 gezeigten Komponenten in der Form einer Transformationseinheit T, eines Quantisierers Q, eines inversen Quantisierers IQ, einer inversen Transformationseinheit IT, eines Bildspeichers SP, eines Bewegungsschätzers ME sowie entsprechender Addierer A und A' enthalten. All diese Komponenten können wiederum als einzelne Hardwarekomponenten realisiert sein.

Die Vorrichtung EC beinhaltet in der Ausgestaltung der Fig. 10 ein Mittel 100 zur Einteilung der Bildbereiche der verarbeiteten Bilder in Codierzyklen. Dabei wird in einem Codierzyklus die Entropiecodierung in mehreren parallelen Codierzweigen durchgeführt. Zur Durchführung der Codierung in dem jeweiligen Codierzweig enthält die Vorrichtung EC beispielhaft drei Codiermittel 101, 102 und 103, wobei jedes Codiermittel zur Codierung in dem jeweiligen Codierzweig vorgesehen ist. Sollten mit der Vorrichtung mehr als drei Codierzweige codierbar sein, ist eine entsprechend größere Anzahl an Codiermitteln vorgesehen. Jedes Codiermittel führt eine Entropiecodierung basierend auf einem Satz von Wahrscheinlichkeitsmodellen durch.

Das Codiermittel 101 enthält als Unterkomponenten ein Adaptionsmittel 101a sowie ein Mittel 101b zum Verarbeiten eines gemeinsamen Wahrscheinlichkeitsmodells. Analog enthalten die Codiermittel 102 und 103 auch entsprechende Adaptionsmittel 102a bzw. 103a und entsprechende Mittel 102b bzw. 103b zum Verarbeiten eines gemeinsamen Wahrscheinlichkeitsmodells. Das Adaptionsmittel in dem jeweiligen Codierzweig dient dabei zur Adaption der Häufigkeiten für den Satz von Wahrscheinlichkeitsmodellen bei der Codierung des Bildbereichs basierend auf den im Bildbereich auftretenden Symbolen. Das in jedem Codierzweig vorgesehene Mittel zum Verarbeiten eines gemeinsamen Wahrscheinlichkeitsmodells führt eine Verarbeitung derart durch, dass der in dem jeweiligen Codierzweig zur Codierung verwendete Satz von Wahrscheinlichkeitsmodellen auf dem gemeinsamen, für alle Codierzweige gültigen Satz von Wahrscheinlichkeitsmodellen basiert, welcher die Häufigkeiten von Symbolen in den Bildbereichen aller Codierzweige berücksichtigt. In der Vorrichtung EC ist ferner ein Mittel 104 zur Aktualisierung des gemeinsamen Satzes von Wahrscheinlichkeitsmodellen in vorbestimmen zeitlichen Abständen basierend auf in zumindest einem zeitlich vorhergehenden Codierzyklus adaptierten Häufigkeiten vorgesehen.

Die Codiervorrichtung EC gemäß Fig. 10 liefert eine codierte Folge digitalisierter Bilder, welche über eine beliebige Übertragungsstrecke an die Decodiervorrichtung ED übertragen werden kann. Die Übertragung über die Übertragungsstrecke ist dabei in Fig. 10 durch den Pfeil P angedeutet. Die Decodiervorrichtung ED empfängt den codierten Bildstrom und führt eine entsprechende Entropiedecodierung durch, wobei die Vorrichtung hierfür eine Mehrzahl von Komponenten aufweist. Im Besonderen umfasst die Vorrichtung ED ein Mittel zur Einteilung der codierten Bildbereiche der codierten Folge von digitalisierten Bildern in Decodierzyklen derart, dass in einem Decodierzyklus eine Entropiedecodierung in mehreren parallelen Decodierzweigen erfolgt. Für jeden Decodierzweig ist dabei ein entsprechendes Decodiermittel 201 bzw. 202 bzw. 203 vorgesehen, wobei im Falle von mehr als drei Decodierzweigen entsprechende weitere Decodiermittel in der Vorrichtung ED integriert sind. Jedes Decodiermittel führt eine Entropiedecodierung basierend auf einem Satz von Wahrscheinlichkeitsmodellen durch.

Das Decodiermittel 201 umfasst ein Adaptionsmittel 201a zur Adaption der Häufigkeiten für den Satz von Wahrscheinlichkeitsmodellen bei der Decodierung des codierten Bildbereichs basierend auf den im decodierten Bildbereich auftretenden Symbolen. Darüber hinaus ist ein Mittel 201b zum Verarbeiten eines gemeinsamen Wahrscheinlichkeitsmodells derart vorgesehen, dass der in dem jeweiligen Decodierzweig zur Decodierung verwendete Satz von Wahrscheinlichkeitsmodellen auf dem gemeinsamen, für alle Decodierzweige gültigen Satz von Wahrscheinlichkeitsmodellen basiert, welcher die Häufigkeiten von Symbolen in den decodierten Bildbereichen aller Decodierzweige berücksichtigt. Analog zu dem Decodiermittel 201 umfassen auch die Decodiermittel 202 bzw. 203 ein entsprechendes Adaptionsmittel 202a bzw. 203a zur Adaption der Häufigkeiten und ein entsprechendes Mittel 202b bzw. 203b zum Verarbeiten eines gemeinsamen Wahrscheinlichkeitsmodells. Die Decodiervorrichtung ED der Fig. 10 beinhaltet ferner als weitere Komponente ein Mittel 204 zur Aktualisierung des gemeinsames Satzes von Wahrscheinlichkeitsmodellen in vorbestimmten zeitlichen Abständen basierend auf in zumindest einem zeitlich vorhergehenden Decodierzyklus adaptierten Häufigkeiten.

Mit der Decodiervorrichtung ED wird eine decodierte Folge digitalisierter Bilder erhalten. Die Decodiervorrichtung kann dabei gegebenenfalls ferner die in Fig. 3 gezeigten zusätzlichen Komponenten in der Form eines inversen Quantisierers IQ und einer inversen Transformationseinheit IT sowie eines Speichers SP und eines Addierers A" enthalten. Diese zusätzlichen Komponenten können dabei als einzelne HardwareKomponenten, z.B. als Hardwarekomponenten eines Computers, ausgestaltet sein.

### Literaturverzeichnis

[1] X. Guo, "Ordered Entropy Slices for Parallel CABAC", ITU-T SG 16/Q.6, Doc. VCEG-AK25, Yokohama, Japan, April 2009.
[2] A. Segall and J. Zhao, "Entropy slices for parallel entropy decoding," ITU-T SG 16/Q.6, Doc. COM16-C405, Geneva, Switzerland, April 2008.
[3] V. Sze and M. Budagavi, "Parallel CABAC," ITU-T SG 16/Q.6, Doc. COM16-C334, Geneva, Switzerland, April 2008.
[4] V. Sze, M. Budagavi, A. P. Chandrakasan, "Massively Parallel CABAC", ITU-T ITU-T SG 16/Q.6, Doc. VCEG-AL21, London, UK / Geneva, Switzerland, July 2009.

## Patentansprüche

1. Verfahren zur Codierung von Symbolen aus einer Folge digitalisierter Bilder (I), wobei die Bilder (I) in Bildbereiche (MB) unterteilt sind und die Symbole (S) eines jeweiligen Bildbereichs (MB) mittels einer Entropiecodierung codiert werden, welche auf einem oder mehreren Wahrscheinlichkeitsmodellen beruht, wobei das oder die Wahrscheinlichkeitsmodelle die Häufigkeiten von in Bildbereichen (MB) auftretenden Symbolen (S) berücksichtigen, bei dem
- die Bildbereiche (MB) in Codierzyklen (CC, CC1, CC2, ..., CC5) derart verarbeitet werden, dass in einem Codierzyklus (CC, CC1, CC2, ... CC5) die Entropiecodierung in mehreren parallelen Codierzweigen (1, 2, 3) erfolgt, wobei in einem jeweiligen Codierzweig (1, 2, 3) ein Bildbereich (MB) basierend auf einem Satz von Wahrscheinlichkeitsmodellen codiert wird, wobei die Häufigkeiten für den Satz von Wahrscheinlichkeitsmodellen bei der Codierung des Bildbereichs basierend auf den im Bildbereich (MB) auftretenden Symbolen (S) adaptiert werden;
- der in jedem Codierzweig (1, 2, 3) zur Codierung verwendete Satz von Wahrscheinlichkeitsmodellen auf einem gemeinsamen, für alle Codierzweige (1, 2, 3) gültigen Satz von Wahrscheinlichkeitsmodellen basiert, welcher die Häufigkeiten von Symbolen (S) in den Bildbereichen (MB) aller Codierzweige (1, 2, 3) berücksichtigt;
- der gemeinsame Satz von Wahrscheinlichkeitsmodellen in vorbestimmten zeitlichen Abständen basierend auf in zumindest einem zeitlich vorhergehenden Codierzyklus (CC, CC1, CC2, ..., CC5) adaptierten Häufigkeiten aktualisiert wird.

2. Verfahren nach Anspruch 1, bei dem die Aktualisierung des gemeinsamen Satzes von Wahrscheinlichkeitsmodellen sequentiell derart erfolgt, dass bei zeitlich aufeinander folgenden Aktualisierungen die adaptierten Häufigkeiten von unterschiedlichen Codierzweigen (1, 2, 3) berücksichtigt werden.

3. Verfahren nach einem der vorhergehenden Ansprüche, bei dem die Aktualisierung des gemeinsamen Satzes von Wahrscheinlichkeitsmodellen zu vorgegebenen Synchronisationszeitpunkten (T1, T2, T3) erfolgt, an denen der gemeinsame Satz von Wahrscheinlichkeitsmodellen basierend auf den adaptierten Häufigkeiten von allen Codierzweigen (1, 2, 3) zumindest eines vorhergehenden Codierzyklus (CC, CC1, CC2, ..., CC5) aktualisiert wird.

4. Verfahren nach einem der vorhergehende Ansprüche, bei dem die Aktualisierung des gemeinsamen Satzes von Wahrscheinlichkeitsmodellen zumindest zeitweise basierend auf in dem unmittelbar zeitlich vorhergehenden Codierzyklus (CC, CC1, CC2, ..., CC5) adaptierten Häufigkeiten erfolgt.

5. Verfahren nach einem der vorhergehende Ansprüche, bei dem die Aktualisierung des gemeinsamen Satzes von Wahrscheinlichkeitsmodellen zumindest zeitweise basierend auf in einem nicht unmittelbar zeitlich vorhergehenden Codierzyklus (CC, CC1, CC2, ..., CC5) adaptierten Häufigkeiten erfolgt.

6. Verfahren nach einem der vorhergehenden Ansprüche, bei dem nach der Codierung eines Bildbereichs (MB) in einem jeweiligen Codierzweig (1, 2, 3) die adaptierten Häufigkeiten in einem intermediären, dem jeweiligen Codierzweig (1, 2, 3) zugeordneten Satz von Wahrscheinlichkeitsmodellen zwischengespeichert werden, wobei bis zur Aktualisierung des gemeinsamen Satzes von Wahrscheinlichkeitsmodellen ein oder mehrere zwischengespeicherte intermediäre Sätze von Wahrscheinlichkeitsmodellen in Kombination mit dem gemeinsamen Satz von Wahrscheinlichkeitsmodellen zur Entropiecodierung im jeweiligen Codierzweig (1, 2, 3) eingesetzt werden.

7. Verfahren nach einem der vorhergehenden Ansprüche, bei dem die Entropiecodierung eines jeweiligen Bildbereichs (MB) eine VLC-Codierung und/oder eine arithmetische Codierung ist, insbesondere eine CAVLC- und/oder CABAC-Codierung.

8. Verfahren nach einem der vorhergehenden Ansprüche, bei dem die Codierzweige (1, 2, 3) derart ausgestaltet sind, dass ein Codierzyklus (CC, CC1, CC2, ..., CC5) durch Bildbereiche (MB) gebildet wird, welche gemäß einem zeilen- oder spaltenweisen Verlauf der Bildbereiche (MB) in den Bildern (I) aufeinander folgen.

9. Verfahren nach einem der vorhergehenden Ansprüche, bei dem die Codierzweige (1, 2, 3) derart ausgestaltet sind, dass ein Codierzyklus (CC, CC1, CC2, ..., CC5) durch Bildbereiche (MB) gebildet wird, welche gemäß einem zickzack-förmigen Verlauf der Bildbereiche (MB) in den Bildern (I) aufeinander folgen.

10. Verfahren nach einem der vorhergehenden Ansprüche, bei dem die Bilder (I) in Bildabschnitte unterteilt werden, welche separat entropiecodiert werden.

11. Verfahren nach Anspruch 10, bei dem die Bildabschnitte zumindest zeitweise ohne Berücksichtigung von Abhängigkeiten zwischen den Bildabschnitten und/oder zumindest zeitweise unter Berücksichtigung von Abhängigkeiten zwischen den Bildabschnitten codiert werden.

12. Verfahren nach einem der vorhergehenden Ansprüche, bei dem die Symbole (S) aus der Folge digitalisierter Bilder durch eine Transformation und Quantisierung von Bildbereichen (MB) generiert werden.

13. Verfahren nach einem der vorhergehenden Ansprüche, bei dem die Symbole aus der Folge digitalisierter Bilder basierend auf dem Standard H.264 generiert werden.

14. Verfahren zur Decodierung von mit einem Verfahren nach einem der vorhergehenden Ansprüchen codierten Symbolen (S') aus einer Folge digitalisierter Bilder (I), wobei die Bilder (I) in Bildbereiche (MB) unterteilt sind und die Symbole (S) eines jeweiligen Bildbereichs (MB) mittels einer Entropiecodierung nach einem der vorhergehenden Ansprüche codiert wurden, wobei die Entropiecodierung auf einem oder mehreren Wahrscheinlichkeitsmodellen beruht, wobei das oder die Wahrscheinlichkeitsmodelle die Häufigkeiten von in Bildbereichen (MB) auftretenden Symbolen (S) berücksichtigen, bei dem
- die codierten Bildbereiche (MB') in Decodierzyklen (DC1, DC2, DC3) derart verarbeitet werden, dass in einem Decodierzyklus (DC1, DC2, DC3) eine Entropiedecodierung in mehreren parallelen Decodierzweigen (1', 2', 3') erfolgt, wobei in einem jeweiligen Decodierzweig (1', 2', 3') ein codierter Bildbereich (MB') basierend auf einem Satz von Wahrscheinlichkeitsmodellen decodiert wird, wobei die Häufigkeiten für den Satz von Wahrscheinlichkeitsmodellen bei der Decodierung des codierten Bildbereichs (MB') basierend auf den im decodierten Bildbereich (MB') auftretenden Symbolen (S) adaptiert werden;
- der in jedem Decodierzweig (1', 2', 3') zur Decodierung verwendete Satz von Wahrscheinlichkeitsmodellen auf einem gemeinsamen, für alle Decodierzweige gültigen Satz von Wahrscheinlichkeitsmodellen basiert, welcher die Häufigkeiten von Symbolen (S) in den decodierten Bildbereichen aller Decodierzweige (1', 2', 3') berücksichtigt;
- der gemeinsame Satz von Wahrscheinlichkeitsmodellen in vorbestimmten zeitlichen Abständen basierend auf in zumindest einem zeitlich vorhergehenden Decodierzyklus (DC1, DC2, DC3) adaptierten Häufigkeiten aktualisiert wird.

15. Verfahren zur Codierung und Decodierung einer Folge digitalisierter Bilder, wobei
- Symbole (S) aus der Folge digitalisierter Bilder mit einem Verfahren nach einem der Ansprüche 1 bis 13 codiert werden;
- die codierte Symbole (S') mit einem Verfahren nach Anspruch 14 decodiert werden.

16. Vorrichtung zur Codierung von Symbolen aus einer Folge digitalisierter Bilder, wobei die Bilder (I) in Bildbereiche (MB) unterteilt sind und die Symbole (S) eines jeweiligen Bildbereichs (MB) durch die Vorrichtung mittels einer Entropiecodierung codierbar sind, welche auf einem oder mehreren Wahrscheinlichkeitsmodellen beruht, wobei das oder die Wahrscheinlichkeitsmodelle die Häufigkeiten von in Bildbereichen (MB) auftretenden Symbolen (S) berücksichtigen, wobei die Vorrichtung eine Verarbeitungseinheit (EC) umfasst, welche beinhaltet:
- ein Mittel (100) zur Einteilung der Bildbereiche (MB) in Codierzyklen (CC, CC1, CC2, ..., CC5) derart, dass in einem Codierzyklus (CC, CC1, CC2, ..., CC5) die Entropiecodierung in mehreren parallelen Codierzweigen (1, 2, 3) erfolgt;
- eine Mehrzahl von Codiermitteln, wobei jedes Codiermittel (101, 102, 103) zur Entropiecodierung eines jeweiligen Codierzweigs (1, 2, 3) derart dient, dass in dem jeweiligen Codierzweig (1, 2, 3) ein Bildbereich (MB) basierend auf einem Satz von Wahrscheinlichkeitsmodellen codiert wird, wobei jedes Codiermittel (101, 102, 103) umfasst:
- ein Adaptionsmittel (101a, 102a, 103a) zur Adaption der Häufigkeiten für den Satz von Wahrscheinlichkeitsmodellen bei der Codierung des Bildbereichs basierend auf den im Bildbereich (MB) auftretenden Symbolen (S),
- ein Mittel (101b, 102b, 103b) zum Verarbeiten eines gemeinsamen Wahrscheinlichkeitsmodells derart, dass der in dem jeweiligen Codierzweig (1, 2, 3) zur Codierung verwendete Satz von Wahrscheinlichkeitsmodellen auf dem gemeinsamen, für alle Codierzweige (1, 2, 3) gültigen Satz von Wahrscheinlichkeitsmodellen basiert, welcher die Häufigkeiten von Symbolen (S) in den Bildbereichen (MB) aller Codierzweige (1, 2, 3) berücksichtigt;
- ein Mittel (104) zur Aktualisierung des gemeinsamen Satzes von Wahrscheinlichkeitsmodellen in vorbestimmten zeitlichen Abständen basierend auf in zumindest einem zeitlich vorhergehenden Codierzyklus (CC, CC1, CC2, ..., CC5) adaptierten Häufigkeiten.

17. Vorrichtung nach Anspruch 16, wobei die Vorrichtung (COD) ein oder mehrere weitere Mittel zur Durchführung eines Verfahrens nach einem der Ansprüche 2 bis 13 umfasst.

18. Vorrichtung zur Decodierung von codierten Symbolen (S') aus einer Folge digitalisierter Bilder (I), wobei die Bilder (I) in Bildbereiche (MB) unterteilt sind und die Symbole (S) eines jeweiligen Bildbereichs (MB) mittels einer Entropiecodierung nach einem der Ansprüche 1 bis 13 codiert wurden, wobei die Entropiedecodierung (ED) auf einem oder mehreren Wahrscheinlichkeitsmodellen beruht, wobei das oder die Wahrscheinlichkeitsmodelle die Häufigkeiten von in decodierten Bildbereichen (MB) auftretenden Symbolen (S) berücksichtigen, wobei die Vorrichtung eine Verarbeitungseinheit (ED) umfasst, welche beinhaltet:
- ein Mittel (200) zur Einteilung der codierten Bildbereiche (MB') in Decodierzyklen (DC1, DC2, DC3) derart, dass in einem Decodierzyklus (DC1, DC2, DC3) eine Entropiedecodierung in mehreren parallelen Decodierzweigen (1', 2', 3') erfolgt;
- eine Mehrzahl von Decodiermitteln, wobei jedes Decodiermittel (201, 202, 203) zur Entropiecodierung eines jeweiligen Decodierzweigs (1', 2', 3') derart dient, dass in dem jeweiligen Decodierzweig (1', 2', 3') ein codierter Bildbereich (MB') basierend auf einem Satz von Wahrscheinlichkeitsmodellen decodiert wird, wobei jedes Decodiermittel (201, 202, 203) umfasst:
- ein Adaptionsmittel (201a, 202a, 203a) zur Adaption der Häufigkeiten für den Satz von Wahrscheinlichkeitsmodellen bei der Decodierung des codierten Bildbereichs (MB') basierend auf den im decodierten Bildbereich (MB') auftretenden Symbolen (S),
- ein Mittel (201b, 202b, 203b) zum Verarbeiten eines gemeinsamen Wahrscheinlichkeitsmodells derart, dass der in dem jeweiligen Decodierzweig (1', 2', 3') zur Decodierung verwendete Satz von Wahrscheinlichkeitsmodellen auf dem gemeinsamen, für alle Decodierzweige gültigen Satz von Wahrscheinlichkeitsmodellen basiert, welcher die Häufigkeiten von Symbolen (S) in den decodierten Bildbereichen (MB') aller Decodierzweige (1', 2', 3') berücksichtigt;
- ein Mittel (204) zur Aktualisierung des gemeinsamen Satzes von Wahrscheinlichkeitsmodellen in vorbestimmten zeitlichen Abständen basierend auf in zumindest einem zeitlich vorhergehenden Decodierzyklus (DC1, DC2, DC3) adaptierten Häufigkeiten.

19. Codec zur Codierung und Decodierung von Symbolen (S) aus einer Folge digitalisierter Bilder (I), umfassend eine Codiervorrichtung (COD) nach Anspruch 16 oder 17 und eine Decodiervorrichtung (DEC) nach Anspruch 18.
